# EUROPÄISCHE PATENTSCHRIFT

(11) **EP 3 994 352 B1**
(45) Veröffentlichungstag und Bekanntmachung des Hinweises auf die Patenterteilung: **19.07.2023**
(21) Anmeldenummer: 20737393.7
(22) Anmeldetag: 01.07.2020
(51) Int. Cl.: F03D 17/00, F03D 7/02, F03D 7/04

(54) **VERFAHREN ZUM BESTIMMEN EINER WINDGESCHWINDIGKEIT IM BEREICH EINER WINDENERGIEANLAGE SOWIE WINDENERGIEANLAGE ZUM AUSFÜHREN DES VERFAHRENS**
METHOD FOR DETERMINING A WIND SPEED IN THE REGION OF A WIND TURBINE, AND WIND TURBINE FOR PERFORMING THE METHOD
PROCÉDÉ POUR DÉTERMINER UNE VITESSE DE VENT DANS LA ZONE D'UNE ÉOLIENNE ET ÉOLIENNE SERVANT À LA MISE EN OEUVRE DE CE PROCÉDÉ

(30) Priorität: 04.07.2019 DE 102019118036
(43) Veröffentlichungstag der Anmeldung: 11.05.2022
(73) Patentinhaber: Wobben Properties GmbH, 26607 Aurich (DE)
(72) Erfinder: SEIFERT, Benjamin, 28357 Bremen (DE)
(74) Vertreter: Eisenführ Speiser
(86) Internationale Anmeldenummer: PCT/EP2020/068441
(87) Internationale Veröffentlichungsnummer: WO 2021/001389

(56) Entgegenhaltungen:
- EP-A1- 3 158 191
- EP-A2- 1 793 123
- EP-B1- 3 158 191
- WO-A1-2013/000468
- US-A1- 2010 135 789
- US-A1- 2012 179 376

## Beschreibung

Die Erfindung betrifft das Gebiet von Windenergieanlagen und hierbei insbesondere eine Windgeschwindigkeitsmessung im Bereich von Windenergieanlagen.

Seit jeher bereitet die Messung der Windgeschwindigkeit im Bereich einer Windenergieanlage Probleme. Dies liegt daran, dass ein Rotor einer Windenergieanlage insbesondere mit den Flächen seiner Rotorblätter bereits beim Stillstand und verstärkt im Betrieb der Windenergieanlage das Windfeld beeinflusst und so insbesondere im Nahbereich der Windenergieanlage eine Windgeschwindigkeitsmessung nicht zu der tatsächlichen Windgeschwindigkeit führt, die im durch die Windenergieanlage unbeeinflussten Bereich vorherrscht. Der Nahbereich einer Windenergieanlage wird üblicherweise als der Bereich bezeichnet, der sich in einem Radius des 2,5-fachen des Rotordurchmessers um die Windenergieanlage herum ergibt.

Der Grund für die Beeinflussung ist, dass eine Energieabgabe aus dem Wind zur Umwandlung in eine Vorwärtsbewegung oder Drehbewegung der Rotorblätter zur Erzeugung elektrischer Leistung mit einer Verringerung der Strömungsgeschwindigkeit und einem Luftstau auf der Luvseite der Windenergieanlage einhergeht. Die Luvseite bezeichnet hierbei den Bereich vor der Windenergieanlage, also den Bereich, aus dem der Wind auf den Rotor der Windenergieanlage eintrifft. Die Luvseite ist also abhängig von der aktuellen Windrichtung als sich ändernd anzunehmen.

Durch die Verringerung der Strömungsgeschwindigkeit sowie durch den Luftstau muss ein Teil der heranströmenden Luft einer durch den Rotor gebildeten Rotorfläche ausweichen. Durch die Verringerung der Strömungsgeschwindigkeit, den Luftstau und das entsprechende Ausweichen des Luftstroms wird so ein Bereich erzeugt, in dem in Abhängigkeit von der Energieentnahme der Windenergieanlage die Windgeschwindigkeit beeinflusst wird. Eine exakte Messung der Windgeschwindigkeit ist so nicht möglich.

Aus diesem Grund werden häufig außerhalb des Nahfelds einer Windenergieanlage, nämlich im Fernfeld, also im Bereich, der außerhalb eines Abstands des 2,5-fachen des Rotordurchmessers einer Windenergieanlage liegt, Windmessmasten aufgestellt, um die tatsächliche Windgeschwindigkeit zu bestimmen. In diesem Bereich ist das Windfeld weitestgehend als unbeeinflusst durch die Windenergieanlage anzunehmen, sodass eine tatsächliche Windgeschwindigkeit bestimmbar ist.

Der Einsatz von Windmessmasten ist jedoch mit hohen Kosten verbunden, sodass sich der Einsatz, insbesondere bei Einzelanlagen, teilweise mit einem signifikanten Anteil auf die Gesamtkosten des Projekts auswirkt. Wird daher kein Windmessmast vorgesehen, so kann nur noch im Bereich der Windenergieanlage eine Windmessung vorgenommen und anhand des aktuellen Betriebszustandes, nämlich insbesondere anhand der aktuell entnommenen Energie, auf die tatsächliche Windgeschwindigkeit geschlossen werden. Die hierbei durchzuführende Abschätzung ist jedoch in der Regel ungenau. Wird demnach ein Windmessmast außerhalb eines Abstands des 2,5-fachen des Rotordurchmessers vor einer zu vermessenden Windenergieanlage aufgestellt, ist das Windfeld, bestehend aus Windstärke, -richtung, -shear,- veer, Turbulenz und anderen charakterisierenden Größen, das auf die Windenergieanlage trifft, nicht mehr das selbe, das der Windmessmast gemessen hat. Die Messunsicherheit steigt mit dem Abstand, insbesondere jedoch mit der Richtungsabweichung des Windes von der Richtung Windmessmast zu Windenergieanlage stark an. Je näher die Messung an der Windenergieanlage stattfindet, umso geringer ist die Unsicherheit im Messergebnis, dafür steigt die Beeinflussung der Messung durch die Anlage an.

Eine genaue Kenntnis der Windgeschwindigkeit, wie sie demnach auch mit Windmessmasten nur schwer möglich ist, ermöglicht einen besonders effizienten Betrieb einer Windenergieanlage. Beispielsweise ist, insbesondere bei geringen Windgeschwindigkeiten, ein vergleichsweise hoher Erregerstrom bei einer mit einem fremderregten Generator ausgestatteten Windenergieanlage nötig, um die maximal mögliche Leistung aus dem Wind zu entnehmen. Dieser hohe Erregerstrom übersteigt dann teilweise den Energieertrag, sodass eine Windenergieanlage dann ineffizient arbeitet. Ist die genaue Windgeschwindigkeit bekannt, ist es daher bei geringen Windgeschwindigkeiten sinnvoll, den Erregerstrom zu reduzieren, bis zwar dem Wind nicht die maximal mögliche Leistung entnommen wird, aber eine positive Energiebilanz erhalten bleibt.

In der prioritätsbegründenden deutschen Patentanmeldung hat das Deutsche Patent- und Markenamt die folgenden Dokumente recherchiert: US 2011/0204635 A1 und US 2019/0048853 A1. Weitere relevante Dokumente sind EP3158191 und EP1793123.

Aufgabe der vorliegenden Erfindung ist es daher, auf möglichst einfache und kostengünstige Weise eine durch eine Windenergieanlage unbeeinflusste Windgeschwindigkeit im Bereich der Windenergieanlage zu bestimmen.

Erfindungsgemäß wird daher ein Verfahren nach Anspruch 1 vorgeschlagen. Das erfindungsgemäße Verfahren umfasst das Bestimmen einer Windgeschwindigkeit im Bereich einer Windenergieanlage. Diese zu bestimmende Windgeschwindigkeit wird auch als tatsächliche Windgeschwindigkeit oder korrigierte Windgeschwindigkeit bezeichnet. Zum Bestimmen der korrigierten Windgeschwindigkeit wird zunächst eine Windgeschwindigkeit im Bereich einer Windenergieanlage gemessen, die weiter auch als gemessene Windgeschwindigkeit bezeichnet wird und sich somit von der korrigierten Windgeschwindigkeit begrifflich unterscheidet. Außerdem wird eine durch den Wind auf mindestens ein Rotorblatt ausgeübte Kraft bestimmt. Mit der bestimmten Kraft wird ein Windgeschwindigkeitsdifferenzwert bestimmt oder daraus abgeleitet. Es wird also ein Windgeschwindigkeitsdifferenzwert bestimmt, der abhängig von der bestimmten Kraft ist. Die Kraft kann hierbei durch direkte Messung oder durch indirekte Messung und Rückrechnung, beispielsweise durch Messung von Drücken oder Druckunterschieden an der Oberfläche von mindestens einem Rotorblatt, erfolgen, oder durch eine vergleichende Messung der Windgeschwindigkeit vor und hinter dem Rotorblatt.

Weiter wird die korrigierte Windgeschwindigkeit bestimmt, wobei dies durch Korrigieren der gemessenen Windgeschwindigkeit in Abhängigkeit des Windgeschwindigkeitsdifferenzwerts erfolgt. Es wird somit eine korrigierte Windgeschwindigkeit bestimmt, indem die gemessene Windgeschwindigkeit in Abhängigkeit des Windgeschwindigkeitsdifferenzwerts, der wiederum abhängig von der bestimmten Kraft ist, geändert oder korrigiert wird, um so die korrigierte Windgeschwindigkeit zu erhalten.

Vorzugweise findet das Messen der Windgeschwindigkeit im Bereich der Windenergieanlage und das Bestimmen der durch den Wind auf mindestens ein Rotorblatt ausgeübten Kraft im Wesentlichen zu gleichen Zeitpunkten, insbesondere mit einem Zeitunterschied von weniger als einer Sekunde, weniger als zwei Sekunden oder weniger als vier Sekunden, statt.

So kann exakt basierend auf einer gemessenen Windgeschwindigkeit und einer zu dem Zeitpunkt der Messung auf das Rotorblatt ausgeübten Kraft darauf geschlossen werden, welche Blattlast zu diesem Zeitpunkt oder Messzeitpunkt auf die Windenergieanlage ausgeübt wird.

Der Erfindung liegt die Erkenntnis zugrunde, dass moderne Windenergieanlagen dem Auftriebsprinzip unterliegen, sodass die dem Wind entnommene Energie einerseits in eine Blattlast und andererseits in einen Vortrieb gewandelt wird. Die Vortriebskraft kann zur Energieerzeugung verwendet werden. Wird nun die Blattlast bestimmt, kann im Umkehrschluss auch der Vortrieb und so die daraus resultierende Veränderung des Windfelds, nämlich insbesondere eine Verringerung der Strömungsgeschwindigkeit, ein Luftstau und entsprechend eine Menge an ausweichender Strömung, bestimmt werden, aus der sich dann der Windgeschwindigkeitsdifferenzwert ergibt oder ableiten lässt. Folglich kann die korrigierte Windgeschwindigkeit in einfacher Weise bestimmt werden.

Eine sehr exakte tatsächliche Windgeschwindigkeit aus einer Messung einer Windgeschwindigkeit, die fehlerbehaftet ist, kann so bestimmt werden, um die Windenergieanlage zu betreiben. Ein effizienter Betrieb ist so auch ohne den Einsatz von Windmessmasten und daher kostengünstiger möglich.

Gemäß der Erfindung umfasst das Messen der Windgeschwindigkeit, dass das Messen der Windgeschwindigkeit in einem ersten Abstand oder bei einer ersten Position luvseitig der Windenergieanlage erfolgt. Weiter wird der Windgeschwindigkeitsdifferenzwert dann zusätzlich in Abhängigkeit von dem ersten Abstand bestimmt. Hierbei wird berücksichtigt, dass beispielsweise bereits das Messen der Windgeschwindigkeit in dem durch die Windenergieanlage beeinflussten Bereich einerseits oder andererseits in einem noch nicht beeinflussten Bereich, beispielsweise mit einem großen Abstand, erfolgt. Dies ist beispielsweise abhängig von der Ausgestaltung des Messmittels zum Messen der Windgeschwindigkeit. Je nachdem, ob nun also eine Windgeschwindigkeit gemessen wird, die im nicht beeinflussten Bereich oder im beeinflussten Bereich liegt, wird dann ein Windgeschwindigkeitsdifferenzwert angepasst. Hierbei wird insbesondere auch berücksichtigt, wie stark beispielsweise eine Beeinflussung der Windenergieanlage bereits durch den Rotor bei dem ersten Abstand oder an der ersten Position anzunehmen ist. Wird anhand der bestimmten Kraft beispielsweise ein Windfeld bestimmt, insbesondere auch im Hinblick auf seine Dynamik, so kann anhand des Abstands oder der Position genau die Art und Höhe der Beeinflussung im Abstand oder Punkt des bestimmten Windfelds herangezogen werden.

Gemäß der Erfindung umfasst das Verfahren zusätzlich das Festlegen eines zweiten Abstands luvseitig der Windenergieanlage oder einer zweiten Position. Der zweite Abstand oder die zweite Position entspricht dann dem Abstand oder der Position, in dem bzw. an der die tatsächliche Windgeschwindigkeit bestimmt werden soll. Weiter erfolgt gemäß dieser Ausführungsform entsprechend das Bestimmen des Windgeschwindigkeitsdifferenzwerts zusätzlich in Abhängigkeit von dem zweiten Abstand.

Besonders vorteilhaft kann so durch Festlegen des ersten Abstands und des zweiten Abstands beispielsweise eine Windgeschwindigkeit mit dem ersten Abstand gemessen werden, aus der dann mittels des Windgeschwindigkeitsdifferenzwerts, der abhängig von der bestimmten Kraft, dem ersten Abstand sowie dem zweiten Abstand ist, eine korrigierte Windgeschwindigkeit an einem Punkt mit einem anderen Abstand als dem der Messung zugrundeliegenden Abstand bestimmt werden. Somit ist es auch möglich, die korrigierte Windgeschwindigkeit in einem Punkt zu bestimmen, der ebenfalls durch die Windenergieanlage beeinflusst ist.

Gemäß der Erfindung entspricht der zweite Abstand oder die zweite Position, in dem bzw. an der die korrigierte Windgeschwindigkeit bestimmt werden soll, einem Abstand oder einer Position, der oder die in einem Bereich liegt, der außerhalb des Nahfeldbereichs der Windenergieanlage liegt. Der Nahfeldbereich ist insbesondere als ein Bereich um die Windenergieanlage in einem Radius definiert, der dem Durchmesser des Rotors der Windenergieanlage, dem Zweifachen des Durchmessers des Rotors der Windenergieanlage oder dem Zweieinhalbfachen des Durchmessers des Rotors der Windenergieanlage entspricht. Demnach wird die korrigierte oder tatsächliche Windgeschwindigkeit im unbeeinflussten Bereich der Windenergieanlage bestimmt werden.

Gemäß einer weiteren Ausführungsform entspricht der erste Abstand, also der Abstand, in dem die Windgeschwindigkeit gemessen wird, einem Abstand innerhalb des Nahfeldbereichs oder die erste Position einer Position im Nahfeldbereich. Insbesondere entspricht der erste Abstand einem Abstand von im Wesentlichen 90 Metern, 60 Metern oder 40 Metern zur Windenergieanlage. Vorteilhafterweise liegt der erste Abstand zumindest in im Bereich zwischen 90 Metern und 60 Metern, 60 Metern und 40 Metern oder 40 Metern und 0 Metern von der Windenergieanlage.

Durch Festlegen des zweiten Abstands oder der zweiten Position außerhalb des Nahfeldbereichs und des ersten Abstands oder der ersten Position innerhalb des Nahfeldbereichs lassen sich daher unbeeinflusste Windgeschwindigkeiten anhand des Windgeschwindigkeitsdifferenzwerts, also nur in Abhängigkeit der bestimmten Kraft, auch dann genau bestimmen, wenn die Geschwindigkeitsmessung innerhalb des Nahfeldbereichs, also des bereits beeinflussten Bereichs, erfolgt.

Gemäß einer weiteren Ausführungsform erfolgt das Messen der Windgeschwindigkeit mit einem Lidarsystem. Lidar bedeutet Light Detection and Ranging und wird auch als Ladar bezeichnet, was der Abkürzung für Laser Detection and Ranging entspricht. Durch ein Lidarsystem können unterschiedliche erste Abstände, insbesondere Abstände im Wesentlichen von 90, 60 oder 40 Metern, für eine Messung eingestellt oder vorgegeben werden, um Messungen in unterschiedlich beeinflussten Bereichen zu messen.

Gemäß einer weiteren Ausführungsform umfasst das Verfahren das Erzeugen einer Tabelle oder Funktion durch Hinterlegen korrigierter Windgeschwindigkeiten in Verbindung mit der mit dem entsprechenden Lidarsystem gemessenen Windgeschwindigkeit. Mittels der Tabelle oder Funktion kann dann eine Lidarmessung im Nahfeld ohne Windgeschwindigkeitskorrekturdifferenzwert in eine Windgeschwindigkeit außerhalb des Nahfelds mittels der Tabelle oder Funktion umgerechnet werden. Die Tabelle und/oder Funktion ist somit auch als Kalibriertabelle oder Kalibrierfunktion, insbesondere zum Kalibrieren des Lidarsystems, geeignet.

Gemäß einer weiteren Ausführungsform wird der Windgeschwindigkeitsdifferenzwert abhängig von der bestimmten Kraft ermittelt, indem die bestimmte Kraft mittels mindestens einer hinterlegten Funktion oder mindestens einer hinterlegten Tabelle in den Windgeschwindigkeitsdifferenzwert überführt wird. Eine einfache Bestimmung des Windgeschwindigkeitsdifferenzwerts ist so möglich.

Gemäß einer weiteren Ausführungsform erfolgt das Bestimmen des Windgeschwindigkeitsdifferenzwerts zusätzlich in Abhängigkeit der Drehgeschwindigkeit und/oder Blattstellung. Hierdurch ist dann in einfacher Art und Weise ein aktueller Auftrieb der Rotorblätter messbar und zusammen mit der Blattbiegung, die die Blattlast anzeigt, eine exakte Kenntnis darüber bekannt, wie hoch die Anteile der dem Wind entnommenen Energie für die Blattlast und für den Vortrieb sind. Eine besonders genaue Bestimmung des Windgeschwindigkeitsdifferenzwerts und somit der korrigierten Windgeschwindigkeit ist somit möglich.

Gemäß einer weiteren Ausführungsform erfolgt das Korrigieren der gemessenen Windgeschwindigkeit in Abhängigkeit des Windgeschwindigkeitsdifferenzwerts, indem der Windgeschwindigkeitsdifferenzwert von der gemessenen Windgeschwindigkeit abgezogen wird oder diese aufaddiert werden. Hierdurch ist die korrigierte Windgeschwindigkeit besonders einfach aus der gemessenen Geschwindigkeit bestimmbar.

Gemäß einer weiteren Ausführungsform wird das Bestimmen einer durch den Wind auf mindestens ein Rotorblatt ausgeübten Kraft ausgeführt, indem Messwerte von mindestens einem Sensor in oder an mindestens einem Rotorblatt ausgewertet werden. Der Sensor ist insbesondere eine Messeinrichtung zur Erfassung von dehnenden oder stauchenden Verformungen des Rotorblatts, nämlich insbesondere ein Dehnungsmessstreifen oder mindestens ein Drucksensor. Vorzugweise ist der Drucksensor ein optischer Drucksensor. Alternativ kann der Sensor auch ein Kamerasystem umfassen. Anhand einer derart ausgeführten Sensorik lässt sich die ausgeübte Kraft besonders einfach und genau messen.

Gemäß einer weiteren Ausführungsform wird der mindestens eine Sensor zum Messen einer durch den Wind auf mindestens ein Rotorblatt ausgeübten Kraft zumindest vor dem ersten Messen der Kraft kalibriert. Dies erfolgt, indem das Rotorblatt in unterschiedliche Stellungen, insbesondere eine Drei-Uhr-Stellung, Sechs-Uhr-Stellung und/oder Neun-Uhr-Stellung, überführt wird und in den unterschiedlichen Stellungen gemessene Biegungsunterschiede des Rotorblatts mit erwarteten Biegungsunterschieden verglichen wird. Eine Drei-Uhr-Stellung bezeichnet hier eine aus luvseitiger Blickrichtung auf die Rotornabe nach rechts verlaufende, waagerechte Stellung des Rotorblatts, eine Sechs-Uhr-Stellung eine senkrecht nach unten von der Rotorblattnabe ausgehende Stellung des Rotorblatts und eine Neun-Uhr-Stellung eine nach links von der Rotornabe verlaufende, waagerechte Stellung. Somit sind die Sensoren in einfacher Art und Weise kalibrierbar.

Gemäß einer weiteren Ausführungsform wird ein Drehmoment eines Generators der Windenergieanlage in Abhängigkeit der korrigierten Windgeschwindigkeit eingestellt. Die Windenergieanlage ist somit in einem besonders geeigneten Betriebspunkt, der abhängig von einer unbeeinflussten Windgeschwindigkeit ist, einstellbar.

Außerdem umfasst die Erfindung eine Windenergieanlage, die eingerichtet ist, ein Verfahren nach einer der vorgenannten Ausführungsformen auszuführen. Insbesondere umfasst die Windenergieanlage ein Lidarsystem zum Messen der Windgeschwindigkeit.

Gemäß einer Ausführungsform weist die Windenergieanlage außerdem mindestens einen Sensor auf, um eine auf mindestens ein Rotorblatt ausgeübte Kraft zu bestimmen. Vorzugsweise umfasst die Windenergieanlage eine Schaltung, um anhand der bestimmten Kraft gemäß einer Ausführungsform des Verfahrens eine gemessene Windgeschwindigkeit zu korrigieren.

Weitere Ausführungsformen ergeben sich anhand der in den Figuren näher erläuterten Ausführungsbeispiele. Hierbei zeigt
- Fig. 1: eine Windenergieanlage und
- Fig. 2: die Schritte des Verfahrens.

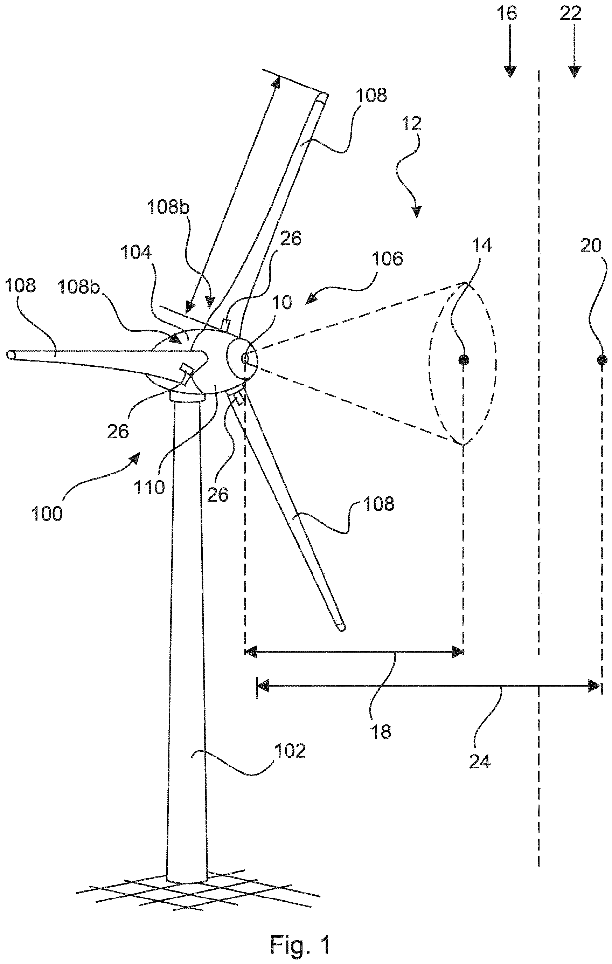

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

Die Windenergieanlage 100 dient zum Ausführen eines Ausführungsbeispiels des Verfahrens. Hierzu weist die Windenergieanlage 100 ein Lidarsystem 10 auf, das im Spinner 110 angeordnet und eingerichtet ist, Windgeschwindigkeiten luvseitig 12 der Windenergieanlage 100 zu bestimmen. Das Lidarsystem 10 ist vorzugsweise fest montiert, wobei die luvseitige 12 Bestimmung der Windgeschwindigkeit dadurch ermöglicht wird, dass ein nicht dargestellter Azimutantrieb die Gondel 104 der Windenergieanlage 100 der Windrichtung nachführt.

Exemplarisch wird in Fig. 1 die Windgeschwindigkeit an einer ersten Position 14 im Nahfeldbereich 16 der Windenergieanlage 100 bestimmt. Die erste Position 14 weist beispielsweise einen ersten Abstand 18 von der Windenergieanlage 100 luvseitig 12 auf. Mit der an der ersten Position 14 bestimmten Windgeschwindigkeit wird gemäß dem Verfahren die Windgeschwindigkeit an einer zweiten Position 20 im Fernfeld 22 der Windenergieanlage 100 bestimmbar. Die zweite Position 20 weist hierzu einen zweiten Abstand 24 luvseitig 12 der Windenergieanlage 100 auf.

Zur Bestimmung der korrigierten Windgeschwindigkeit in der zweiten Position 20 aus der gemessenen Windgeschwindigkeit in der ersten Position 14 wird mittels Sensoren 26 im Bereich der Blattwurzeln 108b der Rotorblätter 108 die durch den Wind auf die Rotorblätter 108 ausgeübte Kraft bestimmt. Anhand dieser Kraft wird ein Windgeschwindigkeitsdifferenzwert bestimmt und die gemessene Geschwindigkeit im Punkt 14 mit dem Windgeschwindigkeitsdifferenzwert korrigiert.

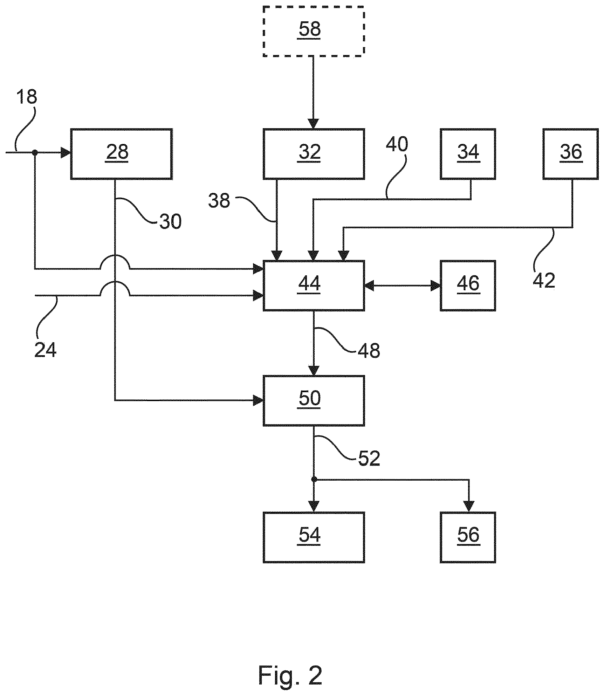

Fig. 2 zeigt die Schritte des Verfahrens. Im Schritt 28 wird eine Windgeschwindigkeit gemessen. Hierzu wird ein erster Abstand 18 eingestellt, voreingestellt oder vorbestimmt. Die Windgeschwindigkeit, die im ersten Abstand 18 gemessen wurde, wird dann als gemessene Windgeschwindigkeit 30 ausgegeben. Parallel oder im Wesentlichen gleichzeitig wird im Schritt 32 eine Kraft bestimmt. Weiter wird in einem Schritt 34 die aktuelle Drehzahl 40 der Windenergieanlage bestimmt und in einem Schritt 36 die Blattstellung 42 der Windenergieanlage bestimmt.

Der erste Abstand 18, die bestimmte Kraft 38, die gemessene Drehzahl 40 und die gemessene Blattstellung 42 werden einem Schritt 44 zum Bestimmen eines Windgeschwindigkeitsdifferenzwerts 48 als Eingabewerte zugeführt. In dem Schritt 44 zum Bestimmen eines Windgeschwindigkeitsdifferenzwerts 48 wird außerdem ein zweiter Abstand 24 als Eingabewert vorgegeben, in dem die korrigierte Windgeschwindigkeit bestimmt werden soll. Anhand der Eingabewerte 18,24,38,40,42 wird der Windgeschwindigkeitsdifferenzwert 48 anhand einer Funktion 46 bestimmt und der Windgeschwindigkeitsdifferenzwert 48 dann ausgegeben.

Zusammen mit der gemessenen Windgeschwindigkeit 30 wird dann in einem Korrekturschritt 50 die korrigierte Windgeschwindigkeit 52 bestimmt. Die korrigierte Windgeschwindigkeit 52 wird nach der Korrektur ausgegeben und in einem Schritt 54 ein Drehmoment eines Generators der Windenergieanlage 100 in Abhängigkeit der korrigierten Windgeschwindigkeit 52 eingestellt. Alternativ oder zusätzlich wird die korrigierte Windgeschwindigkeit 52 im zweiten Abstand 24 in einer Kalibriertabelle in einem Schritt 56 hinterlegt. Die Kalibriertabelle kann beispielsweise später eingesetzt werden, um auch ohne die Bestimmung der Kraft 38 Windgeschwindigkeiten 52 im zweiten Abstand 24 allein durch Messen der Windgeschwindigkeit 30 im ersten Abstand 18 zu bestimmen.

Zum Bestimmen der Kraft im Schritt 32 werden in einem optionalen Schritt 58 die Sensoren 26 kalibriert.

## Patentansprüche

1. Verfahren zum Bestimmen einer korrigierten Windgeschwindigkeit (52) im Bereich einer Windenergieanlage (100), umfassend die Schritte:
- Messen (28) einer Windgeschwindigkeit (30) im Bereich einer Windenergieanlage (100),
- Bestimmen (32) einer durch den Wind auf mindestens ein Rotorblatt (108) ausgeübten Kraft (38),
- Bestimmen (44) eines Windgeschwindigkeitsdifferenzwerts (48), der abhängig von der bestimmten Kraft (38) ist, und
- Bestimmen (50) einer korrigierten Windgeschwindigkeit (52) durch Korrigieren der gemessenen Windgeschwindigkeit (30) in Abhängigkeit des Windgeschwindigkeitsdifferenzwerts (48), wobei
das Messen (28) der Windgeschwindigkeit (30) in einem ersten Abstand (18) luvseitig (12) der Windenergieanlage (100) oder bei einer ersten Position erfolgt und
das Bestimmen (44) des Windgeschwindigkeitsdifferenzwerts (48) zusätzlich in Abhängigkeit von dem ersten Abstand (18) oder der ersten Position erfolgt, wobei
das Verfahren zusätzlich das Festlegen eines zweiten Abstands (24) luvseitig (12) der Windenergieanlage (100) oder einer zweiten Position, in dem die korrigierte Windgeschwindigkeit (52) bestimmt werden soll, umfasst und
das Bestimmen (44) des Windgeschwindigkeitsdifferenzwerts (48) zusätzlich in Abhängigkeit von dem zweiten Abstand (24) oder der zweiten Position erfolgt und wobei
der zweite Abstand (24) als luvseitiger (12) Abstand oder die zweite Position in einem Bereich außerhalb eines Nahfeldbereichs (16) der Windenergieanlage (100) definiert wird, wobei der Nahfeldbereich (16) vorzugsweise als der Bereich definiert wird, der innerhalb eines Radius um die Windenergieanlage (100) liegt, der dem Durchmesser des Rotors (106) der Windenergieanlage (100), dem Zweifachen des Durchmessers des Rotors (106) der Windenergieanlage (100) oder dem Zweieinhalbfachen des Durchmessers des Rotors (106) der Windenergieanlage (100) entspricht.

2. Verfahren nach Anspruch 1, wobei der erste Abstand (18) als ein Abstand definiert wird, der innerhalb des Nahfeldbereichs (16) der Windenergieanlage (100) liegt oder die erste Position als Position definiert wird, die innerhalb des Nahfeldbereichs (16) liegt, und insbesondere der erste Abstand (18) 40 Meter, 60 Meter oder 90 Meter beträgt oder innerhalb eines Bereichs zwischen 0 und 40 Metern, 40 und 60 Metern oder 60 und 90 Metern zur Windenergieanlage (100) liegt.

3. Verfahren nach einem der Ansprüche 1 oder 2, wobei das Messen (28) der Windgeschwindigkeit (30) mit einem Lidarsystem (10) durchgeführt wird.

4. Verfahren nach einem der vorhergehenden Ansprüche, wobei das Verfahren umfasst, dass eine Tabelle oder Funktion (46) mit den korrigierten Windgeschwindigkeitswerten und den entsprechenden gemessenen Windgeschwindigkeiten, erzeugt wird, um anhand gemessener Windgeschwindigkeiten (30) unter Berücksichtigung der Tabelle oder Funktion (46) korrigierte Windgeschwindigkeiten außerhalb des Nahfelds (16) zu bestimmen.

5. Verfahren nach einem der vorhergehenden Ansprüche, wobei der Windgeschwindigkeitsdifferenzwert (48) abhängig von der bestimmten Kraft (38) bestimmt wird, indem die bestimmte Kraft (38) mittels mindestens einer hinterlegten Funktion (46) oder mindestens einer hinterlegten Tabelle in den Windgeschwindigkeitsdifferenzwert (48) überführt wird.

6. Verfahren nach einem der vorhergehenden Ansprüche, wobei das Bestimmen (44) des Windgeschwindigkeitsdifferenzwerts (48) zusätzlich in Abhängigkeit der Drehgeschwindigkeit (40) und/oder Blattstellung (42) erfolgt.

7. Verfahren nach einem der vorhergehenden Ansprüche, wobei das Korrigieren (50) der gemessenen Windgeschwindigkeit (30) in Abhängigkeit des Windgeschwindigkeitsdifferenzwerts (48) ausgeführt wird, indem der Windgeschwindigkeitsdifferenzwert (48) von der gemessenen Windgeschwindigkeit (30) subtrahiert wird oder diese aufaddiert werden.

8. Verfahren nach einem der vorhergehenden Ansprüche, wobei das Bestimmen (32) einer durch den Wind auf mindestens ein Rotorblatt (108) ausgeübten Kraft (38) ausgeführt wird, indem Messwerte von mindestens einem Sensor (26), der in oder an mindestens einem Rotorblatt (108) angeordnet ist, ausgewertet werden, wobei der Sensor (26) insbesondere eine Messeinrichtung zur Erfassung von dehnenden oder stauchenden Verformungen ist, die vorzugsweise mindestens ein Dehnungsmessstreifen, mindestens einen Drucksensor, vorzugsweise optischen Drucksensor, oder ein Kamerasystem umfasst.

9. Verfahren nach Anspruch 8, wobei der mindestens eine Sensor (26) zum Bestimmen einer durch den Wind auf mindestens ein Rotorblatt (108) ausgeübten Kraft 38) zumindest vor dem ersten Bestimmen der Kraft (38) kalibriert (58) wird, indem das Rotorblatt (108) in unterschiedliche Stellungen, insbesondere eine Drei-Uhr-Stellung, eine Sechs-Uhr-Stellung und/oder eine Neun-Uhr-Stellung, überführt wird und ein gemessener Biegungsunterschied des Rotorblatts (108) zwischen unterschiedlichen Stellungen mit erwarteten Biegungsunterschieden verglichen wird.

10. Verfahren nach einem der vorhergehenden Ansprüche, wobei ein Drehmoment, insbesondere durch Einstellen eines Erregerstroms eines Generators der Windenergieanlage (100), in Abhängigkeit der bestimmten Windgeschwindigkeit (52) eingestellt wird.

11. Windenergieanlage, die eingerichtet ist, ein Verfahren nach einem der Ansprüche 1 bis 10 auszuführen, wobei die Windenergieanlage (100) ein Lidarsystem (10) zum Messen der Windgeschwindigkeit und mindestens einen Sensor (26), der in oder an mindestens einem Rotorblatt (108) angeordnet ist, zum Bestimmen einer durch den Wind auf mindestens ein Rotorblatt (108) ausgeübten Kraft (38).

## Claims

1. A method of determining a corrected wind speed (52) in the region of a wind turbine (100) including the steps:
- measuring (28) a wind speed (30) in the region of a wind turbine (100),
- determining (32) a force (38) exerted on at least one rotor blade (108) by the wind,
- determining (44) a wind speed difference value (48) which is dependent on the determined force (38), and
- determining (50) a corrected wind speed (52) by correcting the measured wind speed (30) in dependence on the wind speed difference value (48), wherein
measurement (28) of the wind speed (30) is effected at a first distance (18) windward (12) of the wind turbine (100) or at a first position, and
the operation of determining (44) the wind speed difference value (48) is additionally effected in dependence on the first distance (18) or the first position, wherein
the method additionally includes establishing a second distance (24) at the windward side (12) of the wind turbine (100) or a second position at which the corrected wind speed (52) is to be determined, and
the operation of determining (44) the wind speed difference value (48) is additionally effected in dependence on the second distance (24) or the second position and wherein
the second distance (24) is defined as a windward distance (12) or the second position in a region outside a near field region (16) of the wind turbine (100), wherein the near field region (16) is preferably defined as the region which is within a radius around the wind turbine (100), that corresponds to the diameter of the rotor (106) of the wind turbine (100), double the diameter of the rotor (106) of the wind turbine (100) or two and a half times the diameter of the rotor (106) of the wind turbine (100).

2. A method as claimed in claim 1 wherein the first distance (18) is defined as a distance which is within the near field region (16) of the wind turbine (100) or the first position is defined as a position which is within the near field region (16), and in particular the first distance (18) is 40 meters, 60 meters or 90 meters or is within a region between 0 and 40 meters, 40 and 60 meters and 60 and 90 meters relative to the wind turbine (100).

3. A method as claimed in one of claims 1 or 2 wherein measurement (28) of the wind speed (30) is effected with a lidar system (10).

4. A method as claimed in one of the preceding claims wherein the method includes a table or function (46) being created with the corrected wind speed values and the corresponding measured wind speeds in order to determine corrected wind speeds outside the near field (16) on the basis of measured wind speeds (30) taking account of the table or function (46).

5. A method as claimed in one of the preceding claims wherein the wind speed difference value (48) is determined in dependence on the determined force (38) by the determined force (38) being converted into the wind speed difference value (48) by means of at least one stored function (46) or at least one stored table.

6. A method as claimed in one of the preceding claims wherein the operation of determining (48) the wind speed difference value (48) is additionally effected in dependence on the rotary speed (40) and/or blade position (42).

7. A method as claimed in one of the preceding claims wherein the operation of correcting (50) the measured wind speed (30) is performed in dependence on the wind speed difference value (48) by the wind speed difference value (48) being subtracted from or added to the measured wind speed (30).

8. A method as claimed in one of the preceding claims wherein the operation of determining (32) a force (38) exerted on at least one rotor blade (108) by the wind is carried out by measurement values being assessed by at least one sensor (26) arranged in or at at least one rotor blade (108), wherein the sensor (26) is in particular a measuring device for detecting extending or compressing deformations, which preferably includes at least one strain gauge, at least one pressure sensor, preferably an optical pressure sensor, or a camera system.

9. A method as claimed in claim 8 wherein the at least one sensor (26) for determining a force (38) exerted on at least one rotor blade (108) by the wind is calibrated (58) at least before the first force-determining operation (38) by the rotor blade (108) being moved into different positions, in particular a 3 o'clock position, a 6 o'clock position and/or a 9 o'clock position, and by a measured flexural difference of the rotor blade (108) between different positions being compared to expected flexural differences.

10. A method as claimed in one of the preceding claims wherein a torque is set in particular by setting an exciter current of a generator of the wind turbine (100) in dependence on the determined wind speed (52).

11. A wind turbine adapted to carry out a method as claimed in one of claims 1 through 10, wherein the wind turbine (100) has a lidar system (10) for measuring the wind speed and/or at least one sensor (26) arranged in or at at least one rotor blade (108), for determining a force (38) exerted on at least one rotor blade (108) by the wind.

## Revendications

1. Procédé pour déterminer une vitesse de vent corrigée (52) dans la zone d'une éolienne (100), comprenant les étapes :
- de mesure (28) d'une vitesse de vent (30) dans la zone d'une éolienne (100),
- de détermination (32) d'une force (38) exercée par le vent sur au moins une pale de rotor (108),
- de détermination (44) d'une valeur différentielle de vitesse de vent (48), qui dépend de la force (38) déterminée, et
- de détermination (50) d'une vitesse de vent corrigée (52) par correction de la vitesse de vent mesurée (30) en fonction de la valeur différentielle de vitesse de vent (48), dans lequel
la mesure (28) de la vitesse de vent (30) est effectuée à une première distance (18) du côté au vent (12) de l'éolienne (100) ou à proximité d'une première position, et
la détermination (44) de la valeur différentielle de vitesse de vent (48) est effectuée en supplément en fonction de la première distance (18) ou de la première position, dans lequel
le procédé comprend en supplément la fixation d'une deuxième distance (24) du côté au vent (12) de l'éolienne (100) ou d'une deuxième position, où la vitesse de vent corrigée (52) doit être déterminée, et
la détermination (44) de la valeur différentielle de vitesse de vent (48) est effectuée en supplément en fonction de la deuxième distance (24) ou de la deuxième position et dans lequel
la deuxième distance (24) est définie en tant que distance du côté au vent (12) ou la deuxième position est définie dans une zone à l'extérieur d'un champ proche (16) de l'éolienne (100), dans lequel le champ proche (16) est défini de préférence en tant que la zone qui se situe à l'intérieur d'un rayon autour de l'éolienne (100), qui correspond au diamètre du rotor (106) de l'éolienne (100), au double du diamètre du rotor (106) de l'éolienne (100) ou à deux fois et demie le diamètre du rotor (106) de l'éolienne (100).

2. Procédé selon la revendication 1, dans lequel la première distance (18) est définie en tant qu'une distance, qui se situe à l'intérieur du champ proche (16) de l'éolienne (100), ou la première position est définie en tant qu'une position qui se situe à l'intérieur du champ proche (16), et en particulier la première distance (18) est de 40 mètres, 60 mètres ou 90 mètres ou se situe à l'intérieur d'une zone entre 0 et 40 mètres, 40 et 60 mètres ou 60 et 90 mètres par rapport à l'éolienne (100) .

3. Procédé selon l'une quelconque des revendications 1 ou 2, dans lequel la mesure (28) de la vitesse de vent (30) est effectuée avec un système LIDAR (10) .

4. Procédé selon l'une quelconque des revendications précédentes, dans lequel le procédé comprend qu'un tableau ou une fonction (46) est généré ou générée avec les valeurs de vitesse de vent corrigées et les vitesses de vent mesurées correspondantes pour déterminer, à l'aide de vitesses de vent mesurées (30), des vitesses de vent corrigées à l'extérieur du champ proche (16) en tenant compte du tableau ou de la fonction (46) .

5. Procédé selon l'une quelconque des revendications précédentes, dans lequel la valeur différentielle de vent (48) est déterminée en fonction de la force (38) déterminée en ce que la force (38) déterminée est convertie en la valeur différentielle de vitesse de vent (48) au moyen d'au moins une fonction (46) enregistrée ou d'au moins un tableau enregistré.

6. Procédé selon l'une quelconque des revendications précédentes, dans lequel la détermination (44) de la valeur différentielle de vent (48) est effectuée en supplément en fonction de la vitesse de rotation (40) et/ou de la position de pale (42).

7. Procédé selon l'une quelconque des revendications précédentes, dans lequel la correction (50) de la vitesse de vent mesurée (30) est exécutée en fonction de la valeur différentielle de vitesse de vent (48) en ce que la valeur différentielle de vitesse de vent (48) est soustraite de la vitesse de vent (30) mesurée ou celles-ci sont additionnées.

8. Procédé selon l'une quelconque des revendications précédentes, dans lequel la détermination (32) d'une force (38) exercée par le vent sur au moins une pale de rotor (108) est exécutée en ce que des valeurs de mesure d'au moins un capteur (26), qui est disposé dans ou sur au moins une pale de rotor (108), sont évaluées, dans lequel le capteur (26) est en particulier un système de mesure pour détecter des déformations d'expansion ou de tassement, qui comprend de préférence au moins une jauge de contrainte, au moins un capteur de pression, de préférence un capteur de pression optique, ou un système de caméra.

9. Procédé selon la revendication 8, dans lequel l'au moins un capteur (26) est étalonné (58) pour déterminer, au moins avant la première détermination de la force (38), une force (38) exercée par le vent sur au moins une pale de rotor (108) en ce que la pale de rotor (108) est transférée dans différentes positions, en particulier dans une position à trois heures, dans une position à six heures et/ou dans une position à neuf heures et une différence de flexion mesurée de la pale de rotor (108) entre différentes positions est comparée à des différences de flexion attendues.

10. Procédé selon l'une quelconque des revendications précédentes, dans lequel un couple de rotation est réglé en fonction de la vitesse de vent (52) déterminée, en particulier en réglant un courant d'excitation d'un générateur de l'éolienne (100).

11. Eolienne, qui est mise au point pour exécuter un procédé selon l'une quelconque des revendications 1 à 10,
dans laquelle l'éolienne (100) présente un système LIDAR (10) pour mesurer la vitesse de vent et au moins un capteur (26), qui est disposé dans ou sur au moins une pale de rotor (108), pour déterminer une force (38) exercée par le vent sur au moins une pale de rotor (108).
